# EUROPÄISCHE PATENTANMELDUNG

(11) **EP 0 646 319 A1**
(43) Veröffentlichungstag der Anmeldung: **05.04.1995**
(21) Anmeldenummer: 93250269.3
(22) Anmeldetag: 02.10.1993
(51) Int. Cl.: A23F 5/12, A23F 5/46, A23F 5/14

(54) **Aromatisierter Röstkaffee und Verfahren zum Herstellen von aromatisiertem Röstkaffee**

(71) Anmelder: C. MELCHERS & Co. PRODUKTIONS-GmbH, D-28199 Bremen (DE)
(72) Erfinder: Böhmer, Wolfgang, Diplom Ing.-Chemiker, 28832 Achim (DE)
(74) Vertreter: Patentanwälte Wenzel & Kalkoff

(57) **Zusammenfassung**

Um ein aromatisiertes Röstkaffeeprodukt, dessen Aroma auch ohne Vakuumverpackung über einen längeren Zeitraum erhalten werden kann, sowie ein Verfahren zur Herstellung des Röstkaffeeprodukts zu schaffen, sind die einzelnen aromatisierten Röstkaffeepartikel unter Bildung eines Röstkaffeegranulats mit einer aromaschützenden Ummantelung eines Kaffee-Extraktes aus geröstetem Kaffee versehen. Das erfindungsgemäße Röstkaffeeprodukt wird hergestellt, indem mit Aromastoff versehener Röstkaffee mittels eines flüssigen Kaffee-Extraktes aus geröstetem Kaffee aromaschützend ummantelt wird.

## Beschreibung

Die Erfindung betrifft ein aromatisiertes Röstkaffeeprodukt, umfassend aromatisierte Röstkaffee-Partikel, sowie ein Verfahren zu seiner Herstellung.

Aromatisierter Röstkaffee ist allgemein bekannt und wird als gemahlener Aroma-Röstkaffee vakuumverpackt in relativ großen Verpackungseinheiten angeboten. Das hat jedoch den Nachteil, daß das Aroma nach Öffnen der Verpackung schnell verfliegt und der gewünschte Geschmack bei längerem Aufbewahren in der einmal geöffneten Verpackung nicht mehr erhalten werden kann.

Deshalb ist es inzwischen üblich, aromatisierten Instantkaffee, also keinen Röstkaffee, in portionsweisen Verpackungseinheiten bereitzustellen, die jedoch ebenfalls luftdicht verschlossen werden müssen, um das gewünschte Aroma über einen längeren Zeitraum zu erhalten. Der in diesen Portionspackungen abgefüllte Instantkaffee erreicht in seinem Geschmack nicht die Qualität von Röstkaffee und ist zudem meist mit Zuckerstoffen, Schokoladenanteilen u.ä. versehen, die einen reinen Kaffeegenuß nicht ermöglichen, abgesehen von der von vielen Menschen nicht gewünschten zusätzlichen Kalorienzufuhr, die mit den Zuschlagstoffen verbunden ist.

Der Erfindung liegt demgegenüber die Aufgabe zugrunde, ein aromatisiertes Röstkaffeeprodukt sowie ein Verfahren zu seiner Herstellung zu schaffen, dessen Aroma auch ohne Vakuumverpackung über einen längeren Zeitraum erhalten werden kann.

Diese Aufgabe wird erfindungsgemäß dadurch gelöst, daß die einzelnen aromatisierten Röstkaffee-Partikel unter Bildung eines Röstkaffeegranulats mit einer aromaschützenden Ummantelung eines Kaffee-Extraktes aus geröstetem Kaffee versehen sind. Durch eine Umhüllung der aromatisierten Kaffeepartikel mit einem Röstkaffee-Extrakt wird ein Entweichen der flüchtigen Aromabestandteile weitgehend verhindert und gleichzeitig das Kaffee-Aroma als auch das zusätzlich ein- bzw. aufgebrachte Aroma, bei dem es sich z.B. um Irish Cream, Haselnuß, Kirsche o.ä. handeln kann, vor einem den Geschmack mindernden Luft- bzw. Sauerstoffzutritt geschützt. Aufwendige Vakuumverpackung-Großverpackungen mit dem Zwang zum schnellen Verzehr des Inhalts sind nicht mehr erforderlich. Eine lange Lagerfähigkeit ist auch bei geöffneter Verpackung bei Beibehaltung des gewünschten Geschmackes möglich, und der besonders aromatische Geschmack eines Röstkaffees ist gewährleistet. Der Aromastoff kann je nach verfügbarer Konsistenz flüssig und/oder fest appliziert werden.

Vorteilhafterweise kann die Ummantelung aus aromatisiertem und/oder unaromatisiertem Röstkaffee-Extrakt bestehen, je nachdem, welche Aromaintensität und/oder Konsistenz des Produktes gewünscht wird.

Eine besonders einfache Handhabung des erfindungsgemäßen aromatisierten Röstkaffeeprodukts bei seiner Zubereitung zum Verzehr ist möglich, wenn die ummantelten Röstkaffee-Partikel in Form von Portionspackungen in Aufgußbeuteln nach Art eines Teebeutels vorgesehen sind. Die Lagerfähigkeit bei Beibehaltung des gewünschten Geschmacks ist durch die aromaschützende Ummantelung aus Röstkaffee-Extrakt auch über längere Zeiträume gewährleistet, wobei ein Luft- bzw. Sauerstoffzutritt zu den ummantelten Röstkaffee-Partikeln durch den Portions-Augußbeutel nicht verhindert zu werden braucht. Damit können aufwendige Vakuumverpackungen entfallen.

Das erfindunggemäße Röstkaffeeprodukt läßt sich besonders kosten- und fertigungsgünstig herstellen, wenn mit Aromastoff versehener Röstkaffee mittels eines flüssigen Kaffee-Extrakts aus geröstetem Kaffee aromaschützend ummantelt wird.

Vorteilhafterweise kann man Röstkaffee auf mittlere Korngröße, d.h.in der Größenordnung von 50 bis 3000 µm, mahlen und mit einem flüssigen Aromastoff versehen, den man in einer Ruhezeit von mindestens einer Stunde in die Struktur des gemahlenen Röstkaffees einziehenläßt, danach in einem Wirbelschichtverfahren eine Schicht von flüssigem Kaffee-Extrakt aus Röstkaffee auf den aromatisierten Röstkaffee aufbringen und anschließend das ummantelte Erzeugnis trocknen. Dadurch ist eine besonders vollständige und dichte, den Zweck erfüllende Umhüllung der gemahlenen Röstkaffee-Partikel gewährleist, so daß Luftzutritt zu ihnen weitgehend vollständig ausgeschlossen ist und so der aromatisierte Röstkaffee bei Erhaltung seines Aromas lange lagerfähig bleibt.

Um den Geschmack des aromatisierten Röstkaffees zu erhalten bzw. ihn sogar zu verbessern, kann im fertigen Granulat der Feststoffanteil des Kaffee-Extrakts aus Röstkaffee zwischen 3 und 60 % betragen. Besonders vorteilhaft ist es dabei, wenn im fertigen Granulat der Feststoffanteil des Kaffee-Extraktes aus Röstkaffee zwischen 20 und 40 % beträgt. Diese Mengenverhältnisse zwischen ummanteltem Anteil und Ummantelungskomponente sind besonders zweckmäßig im Hinblick auf eine genügende Menge aromatisierten Materials und die Beibehaltung dessen Geschmacks/Aromas, um eine lange Haltbarkeit des normalerweise sehr empfindlichen Genußmittels zu gewährleisten. Dabei sind innerhalb der angegebenen Größenordnung die verschiedensten Varianten je nach Art des Trägermaterials und/oder der Aromastoffe wie auch im Hinblick auf die beabsichtige Geschmacks-/Aromaintensität möglich.

Es ist im Rahmen der Erfindung ebenfalls möglich, den gemahlenen Röstkaffee mittlerer Korngröße, also zwischen 50 und 3000 µm, mit einer vorgemischten Verbindung aus Aromastoffen und flüssigem Röstkaffee-Extrakt zu ummanteln.

Eine solche Ummantelung ist besonders kostengünstig im wirbelschichtverfahren herstellbar, das zudem die angestrebte Ummantelung in hoher, dem Erfindungsziel entsprechender Qualität sicherstellt.

Zur Vereinfachung des erfindungsgemäßen Herstellungsverfahrens kann der Röstkaffee-Extrakt aus verschiedenen Rohkaffee-Mischungen hergestellt werden. So lassen sich auch spezielle Aroma-Richtungen je nach Wunsch und Bedarf erzielen.

Um ein besonders einfach handhabbares und lagerfähiges aromatisiertes Röstkaffeeprodukt zu erhalten, kann das erhaltene aromatisierte und ummantelte Kaffee-Granulat in Portionsaufgußbeutel abgefüllt und verpackt werden.

Vorteilhaft kann das aromatisierte Kaffeegranulat nach einem Abkühlungsprozeß in einer Dosierung zwischen 2 und 10 g in Portionsaufgußbeutel abgefüllt und verpackt werden.

Zur Erzielung einer noch höheren Aromastabilität ist es auch möglich, das fertige Röstkaffeeprodukt zusätzlich mit einer Schicht eines geschmacksneutralen Stoffes, z.B. Xanthan-Gummi, zu versehen.

Weitere Vorteile und Ausführungsformen oder -möglichkeiten der Erfindung gehen aus der folgenden Beschreibung der Ausführungsbeispiele hervor:

### Beispiel 1:

Auf eine mittlere Korngröße von 2500 µm gemahlener kolumbianischer Röstkaffee (kolumbianisch-mittelamerikanische Mischung, Hochlandkaffee) wird in einem Paddelmischer mit Irish Cream als flüssigem Aroma, mit einem Anteil desselben von 4 Gew-%, in Kontakt gebracht. Es sei darauf hingewiesen, daß sich die Dosierung des Aromastoffes dabei ganz nach der Intensität des eingesetzten Aromas richtet und entsprechende Variationen möglich sind. Das Aroma zieht in einer Ruhezeit von mindestens einer Stunde in die Struktur des gemahlenen Röstkaffees ein. Im Wirbelschichtverfahren wird dann auf den gemahlenen, aromatisierten Röstkaffee eine Schicht aus in herkömmlicher Weise erzeugtem flüssigen Röstkaffee-Extrakt (Mischung aus brasilianisch-mittelamerikanischem Kaffee) aufgebracht. Dieses überzogene Produkt wird getrocknet.

Der Feststoffanteil des Röstkaffee-Extraktes am fertigen Granulat beträgt 35 Gew-%. Das erhaltene getrocknete aromatisierte Kaffeegranulat wird in einen Portions-Filterbeutel gefüllt und ist so für einen Tassenaufguß geeignet. Die Dosierung beträgt 3 g Granulat pro Tassenportion.

### Beispiel 2:

Das beizufügende Aroma des Beispiels 1 wird zur Hälfte mit einem flüssigen Röstkaffee-Extrakt (brasilianisch-mittelamerikanische Mischung) vermischt. Diese Mischung wird dann in einem Wirbelschichtverfahren auf den gemahlenen Röstkaffee, dem zuvor die andere Mengenhälfte des Irish-Cream-Aromas zugesetzt wurde, aufgebracht und ummantelt die einzelnen Partikel. Das Mengenergebnis ist das gleiche wie in Beispiel 1, allerdings ergeben sich geringfügig verminderte Lagerbeständigkeiten, die aber durchaus im Bereich überlicher Toleranzen liegen.

Der Röstkaffee-Extrakt kann natürlich aus verschiedensten Rohkaffee-Mischungen hergestellt sein.

## Patentansprüche

1. Aromatisiertes Röstkaffeeprodukt umfassend aromatisierte Röstkaffee-Partikel, **dadurch gekennzeichnet**, daß die einzelnen aromatisierten Röstkaffee-Partikel unter Bildung eines Röstkaffeegranulats mit einer aromaschützenden Ummantelung eines Kaffee-Extrakts aus geröstetem Kaffee versehen sind.

2. Röstkaffeeprodukt nach Anspruch 1, **dadurch gekennzeichnet**, daß die Ummantelung aus aromatisiertem und/oder unaromatisiertem Kaffee-Extrakt besteht.

3. Röstkaffeeprodukt nach Anspruch 1 oder 2, **dadurch gekennzeichnet,** daß die ummantelten aromatisierten Röstkaffee-Partikel in Form von Portionspackungen in Aufgußbeuteln nach Art von Teebeuteln vorgesehen sind.

4. Verfahren zum Herstellen eines aromatisierten Röstkaffeeprodukts nach einem der Ansprüche 1 bis 3, **dadurch gekennzeichnet**, daß mit Aromastoff versehener Röstkaffee mittels eines flüssigen Kaffee-Extrakts aus geröstetem Kaffee aromaschützend ummantelt wird.

5. Verfahren nach Anspruch 4, **dadurch gekennzeichnet,** daß man Röstkaffee auf mittlere Korngröße mahlt und mit einem flüssigen Aromastoff versieht, den man in einer Ruhezeit von mindestens einer Stunde in die Struktur des gemahlenen Röstkaffees einziehen läßt, danach in einem Wirbelschichtverfahren eine Schicht von flüssigem Kaffee-Extrakt aus Röstkaffee auf den aromatisierten Röstkaffee aufbringt und anschließend das ummantelte Erzeugnis trocknet.

6. Verfahren nach Anspruch 4 oder 5, **dadurch gekennzeichnet,** daß im fertigen Granulat der Feststoffanteil des Kaffee-Extrakts aus Röstkaffee zwischen 3 und 60 % beträgt.

7. Verfahren nach Anspruch 6, **dadurch gekennzeichnet,** daß im fertigen Granulat der Feststoffanteil des Kaffee-Extraktes aus Röstkaffee zwischen 20 und 40 % beträgt.

8. Verfahren nach Anspruch 4, **dadurch gekennzeichnet,** daß gemahlener Röstkaffee mittlerer Korngröße mit einer vorgemischten Verbindung aus Aromastoff und flüssigem Röstkaffee-Extrakt ummantelt wird.

9. Verfahren nach Anspruch 8, **dadurch gekennzeichnet,** daß die Ummantelung im Wirbelschichtverfahren erfolgt.

10. Verfahren nach einem der Ansprüche 4 bis 9, **dadurch gekennzeichnet,** daß der Kaffee-Extrakt aus Röstkaffee aus verschiedenen Rohkaffee-Mischungen hergestellt wird.

11. Verfahren nach einem der Ansprüche 4 bis 10, **dadurch gekennzeichnet,** daß das ummantelte aromatisierte Kaffeegranulat in Portionsaufgußbeutel abgefüllt und verpackt wird.

12. Verfahren nach Anspruch 11, **dadurch gekennzeichnet,** daß das ummantelte aromatisierte Kaffeegranulat nach einem Abkühlungsprozeß in einer Dosierung zwischen 2 und 10 g in Portionsaufgußbeutel abgefüllt und verpackt wird.
